# FASCICULE DE BREVET EUROPEEN

(11) **EP 0 324 327 B1**
(45) Date de publication et mention de la délivrance du brevet: **10.02.1993**
(21) Numéro de dépôt: 88870189.3
(22) Date de dépôt: 19.12.1988
(51) Int. Cl.: B21B 27/00, B23K 26/08, B44B 3/04

(54) **Procédé de marquage de la surface d'un cylindre de laminoir**
Verfahren zum Markieren der Oberfläche einer Walze
Method of marking the surface of a rolling mill roll

(30) Priorité: 08.01.1988 BE 8800019
(43) Date de publication de la demande: 19.07.1989
(73) Titulaire: CENTRE DE RECHERCHES METALLURGIQUES CENTRUM VOOR RESEARCH IN DE METALLURGIE Assoc. sans but lucratif Ver, zonder winstoogmerk, B-1040 Bruxelles (BE)
(72) Inventeur: Terreur, Frédéric, B-4620 Fleron (BE); Defourny, Jacques, B-4320 Saint-Nicolas (BE)
(74) Mandataire: Lacasse, Lucien Emile

(56) Documents cités:
- EP-A- 0 271 469
- BE-A- 870 609
- FR-A- 2 476 524
- GB-A- 2 029 308
- LU-A- 87 193

## Description

La présente invention concerne un procédé de marquage de la surface d'un cylindre de laminoir, dans le but de conférer à cette surface une rugosité isotrope et durable.

On sait que la rugosité d'un cylindre de laminoir conditionne dans une très large mesure la rugosité des tôles métalliques laminées avec ce cylindre.

Cette rugosité du cylindre est constituée d'une multitude de vallées et de pics microscopiques, qui impriment respectivement des pics et des vallées dans la surface de la tôle. La régularité des dimensions et de la répartition de cette rugosité influence en particulier l'aptitude de ces tôles à l'emboutissage et au revêtement.

On connaît déjà, notamment par le brevet LU-A-87.193, un procédé pour créer, au moyen d'un rayonnement énergétique intermittent, une multitude de microcratères dans la surface d'un cylindre de laminoir. Ces microcratères sont entourés d'un bourrelet en relief présentant une dureté élevée. Une tôle laminée avec un tel cylindre présente donc, en surface, une multitude de vallées imprimées par les bourrelets du cylindre, ainsi que des plateaux correspondant aux microcratères.

On connait par le document "La rugosité LASERTEX® pour tôles d'emboutissage" VAN CAMPENHOUT C., MASSART J., Technic Info, Technical News and Data, Cockerill Sambre, exposé au SITEV 84-Geneve, 22. Mai 1984 un procédé de marquage de la surface d'un cylindre de laminoir, qui tourne autour de son axe longitudinal, au moyen d'un rayonnement énergétique intermittent produit au moyen d'un organe rotatif ajouré où les bourrelets associés à la multitude de microcratères formés dans la surface du cylindre ont une valeur du rapport L/l supérieure à 1, L et l étant les dimensions des microcratères mesurées respectivement suivant la périphérie du cylindre et parallèlement à l'axe longitudinal du cylindre. Ce document ne fait pas référence à l'adhérence des bourrelets.

Par rayonnement énergétique, on entend tout rayonnement capable de créer le relief précité, notamment un faisceau lumineux tel qu'un faisceau laser, ou un faisceau d'électrons.

Pour fixer les idées, la description qui va suivre fera particulièrement référence à un faisceau laser. Il va de soi qu'il n'en résulte pas de limitation de l'invention à ce seul type de rayonnement énergétique.

Dans les procédés précités, le cylindre de laminoir est mis en rotation autour de son axe longitudinal et sa surface est frappée par une succession d'impulsions laser produites par hachage d'un faisceau laser continu au moyen d'un disque rotatif ajouré. Le faisceau laser se déplace le long du cylindre, de sorte que sa zone d'impact décrit une trajectoire hélicoïdale sur la surface du cylindre.

Le mécanisme de formation d'un tel microcratère est à présent bien connu. On peut rappeler que dans sa zone d'impact sur la surface du cylindre, chaque impulsion laser provoque l'échauffement d'un certain volume de métal et, à l'intérieur de ce volume, la fusion d'une gouttelette du métal du cylindre. Le volume de métal échauffé, ainsi que celui du métal fondu, dépendent de la puissance et de la durée de l'impulsion laser. L'action de l'impulsion laser est généralement renforcée par un jet de gaz dirigé vers la zone d'impact précitée. La brutale élévation locale de la température provoque la formation d'un plasma au-dessus de la zone d'impact, par combustion du métal. Ce plasma exerce sur le métal fondu une pression qui, combinée à l'effet mécanique du jet de gaz, refoule le métal fondu radialement vers la périphérie de la zone échauffée. Le métal fondu ainsi refoulé, parfois même au-delà de la zone échauffée, forme un bourrelet qui se solidifie très rapidement. La cavité creusée par le refoulement du métal fondu constitue le microcratère.

L'ensemble de ces bourrelets et de ces microcratères détermine la rugosité de la surface du cylindre et par conséquent aussi celle des tôles qui seront laminées avec ce cylindre. La durée de vie des bourrelets conditionne dès lors non seulement la durée de vie du cylindre et la constance de la rugosité des tôles produites mais aussi, par voie de conséquence, la régularité des propriétés de ces tôles notamment en matière d'aptitude à la peinture et de résistance au grippage.

La durée de vie des bourrelets dépend dans une large mesure de leur adhérence à la surface du cylindre. Cette adhérence est à son tour le résultat d'une opération de soudage : si la gouttelette de métal fondu est refoulée trop loin au-delà de la zone échauffée par l'impulsion laser, le bourrelet qui se formera n'adhèrera pas correctement à la surface du cylindre, dont la température est localement trop basse. Il en résultera dès lors une fissure à l'interface entre la surface du cylindre et le bourrelet, conduisant à l'arrachement rapide du bourrelet sous l'effet des forces de laminage. La qualité des tôles laminées se détériore alors et il est nécessaire d'interrompre le laminage pour reconditionner le cylindre. La productivité du laminoir peut en être sérieusement affectée.

La présente invention propose un procédé de marquage de la surface d'un cylindre de laminoir permettant de remédier à ces inconvénients en formant des microcratères pourvus de bourrelets qui présentent une adhérence, et par conséquent une durée de vie, sensiblement accrue.

Le demandeur a en effet constaté, au cours de ses travaux, que l'adhérence des bourrelets pouvait varier dans des proportions appréciables en fonction de la forme des microcratères. Il est apparu à cet égard que les microcratères allongés suivant la périphérie du cylindre conduisaient à des résultats intéressants.

Conformément à la présente invention, il est proposé un procédé pour améliorer l'adhérence des bourrelets associés à la multitude de microcratères formés dans la surface d'un cylindre de laminoir, qui tourne autour de son axe longitudinal, au moyen d'un rayonnement énergétique intermittent produit au moyen d'un organe rotatif ajouré, selon lequel on modifie au moins une dimension des ouvertures dudit organe rotatif ajouré pour donner au rapport L/l une valeur supérieure à 1 et inférieure à 5, L et l étant les dimensions des microcratères mesurées respectivement suivant la périphérie du cylindre et parallèlement à l'axe longitudinal du cylindre.

L'allongement des microcratères dans la direction désirée est exprimée ici par le facteur de forme constitué par le rapport L/l. Il convient de préciser à cet égard que les dimensions L et l sont mesurées sur le volume de métal fondu par une impulsion dudit rayonnement énergétique, en particulier par une impulsion laser; ce volume est plus grand que celui de la cavité qui subsiste après la solidification du bourrelet. Pour simplifier, ces dimensions L et l seront désormais appelées respectivement longueur et largeur des microcratères.

Toujours selon l'invention, le rapport L/l est de préférence compris entre 1,1 et 2,5.

L'adhérence du bourrelet, exprimée par l'effort nécessaire pour arracher ce bourrelet, augmente déjà de façon perceptible dès que le rapport L/l est supérieur à 1; cette augmentation devient réellement intéressante en pratique lorsque le rapport L/l dépasse 1,1. Cette augmentation ne se poursuit cependant pas indéfiniment; dès que le rapport L/l devient supérieur à environ 2,5, le bourrelet est le siège de déformations et celles-ci deviennent inacceptables lorsque le rapport L/l atteint 5.

L'allongement d'un microcratère dans le sens désiré peut être réalisé de différentes manières qui d'une façon générale, conduisent à prolonger la durée d'action de l'impulsion énergétique sur la surface du cylindre par rapport à la durée d'impulsion qui conduit à des cratères circulaires.

Dans le type de procédé visé par l'invention, le cylindre à marquer est mis en rotation à une vitesse constante autour de son axe longitudinal, tandis que le rayonnement énergétique intermittent est obtenu par hachage d'un rayonnement continu par des moyens appropriés. Dans le cas d'un faisceau laser, le hachage est réalisé au moyen d'un disque rotatif ajouré. Dans cette technique, la largeur circonférentielle des ouvertures pratiquées dans le disque, ainsi que les vitesses de rotation du cylindre et du disque hacheur sont généralement adaptées l'une à l'autre de façon à former des microcratères aussi circulaires que possible.

Pour provoquer l'allongement des microcratères préconisé par la présente invention, on peut notamment dimineur la vitesse de rotation du disque hacheur ou augmenter la largeur circonférentielle des ouvertures du disque hacheur, tout en maintenant inchangée la vitesse de rotation du cylindre. On pourrait aussi augmenter la vitesse de rotation du cylindre sans modifier la vitesse de rotation ou les caractéristiques géométriques du disque hacheur. Il est également possible de combiner plusieurs des modifications précitées.

Il est particulièrement aisé de modifier la vitesse de rotation du disque hacheur. Il en résulte cependant que l'écartement entre deux microcratères successifs augmente également, ce qui entraîne une diminution de la densité de microcratères, suivant la périphérie du cylindre. Une telle modification peut, dans certains cas, exercer un effet défavorable sur la rugosité du cylindre ainsi que sur celle de la tôle laminée avec ce cylindre.

L'élargissement des ouvertures du disque hacheur permet d'assurer l'allongement des microcratères sans dimineur leur densité. Cette opération entraîne un resserrement des microcratères, c'est-à-dire une diminution de la distance entre deux microcratères successifs, sans modifier la distance séparant le début de deux microcratères successifs.

D'autres particularités et avantages du procédé de l'invention apparaîtront à la lecture de la description qui va suivre et qui porte sur divers modes de mise en oeuvre de ce procédé dans le cas de l'utilisation d'un faisceau laser. Cette description est illustrée par les dessins annexés, dans lesquels la
- Fig. 1: rappelle le principe du procédé de marquage d'un cylindre de laminoir, au moyen d'un faisceau laser intermittent; la
- Fig. 2: montre la disposition des microcratères résultant d'une diminution de la vitesse de rotation du disque hacheur; et la
- Fig. 3: montre la disposition des microcratères résultant d'un élargissement des ouvertures du disque hacheur.

Dans ces figures, les éléments identiques ou analogues, tels que les distances entre les microcratères ou les dimensions des microcratères, sont désignés par les mêmes symboles.

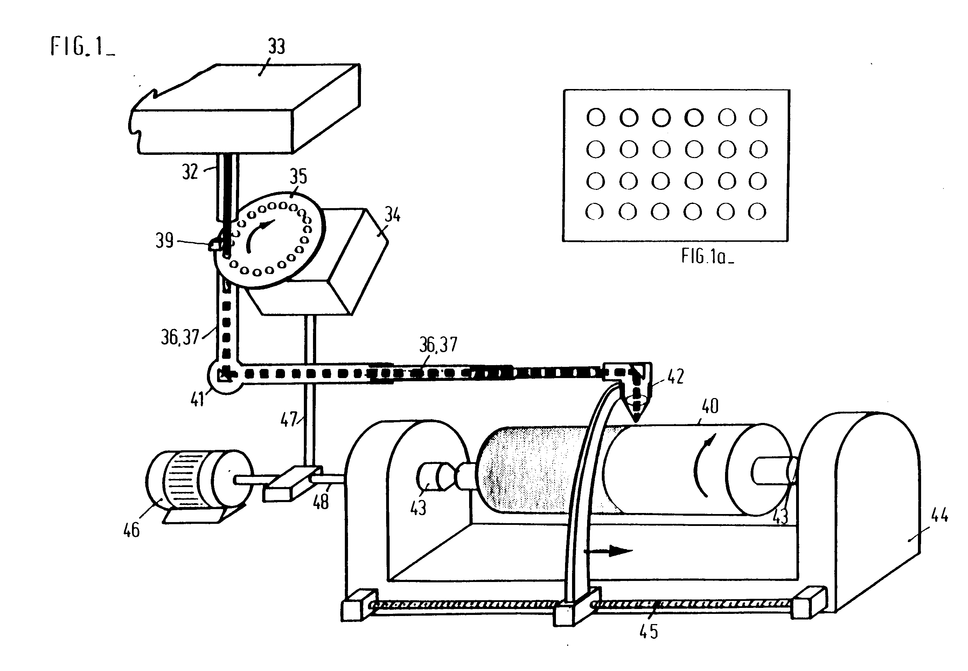

La Fig. 1 représente schématiquement un dispositif de la technique antérieure destiné à rappeler le principe du procédé de marquage d'un cylindre de laminoir à l'aide d'un faisceau laser intermittent.

Un faisceau laser continu 32, provenant d'un émetteur approprié 33, est rendu intermittent par hachage au moyen d'une disque ajouré 35. Le faisceau laser intermittent 36, 37 est transmis à une tête de marquage 42 qui le dévie vers la surface d'un cylindre de laminoir 40 supporté entre des pointes 43. La tête de marquage 42 est entraînée en translation le long du cylindre 40 par l'intermédiaire d'une vis-mère 45. Le disque hacheur 35, le cylindre 40 et la vis-mère 45 sont entraînés en rotation par un moteur 46, par l'intermédiaire de mécanismes de distribution assurant la synchronisation désirée des divers mouvements.

Dans un disque hacheur usuel tel que 35, la largeur des ouvertures est égale à la distance séparant deux ouvertures voisines. On obtient ainsi une rugosité coinstituée de microcratères sensiblement circulaires disposés de façon régulière, comme le montre la Fig. 1a qui est une vue agrandie d'une plage de la surface du cylindre 40, après marquage conventionnel.

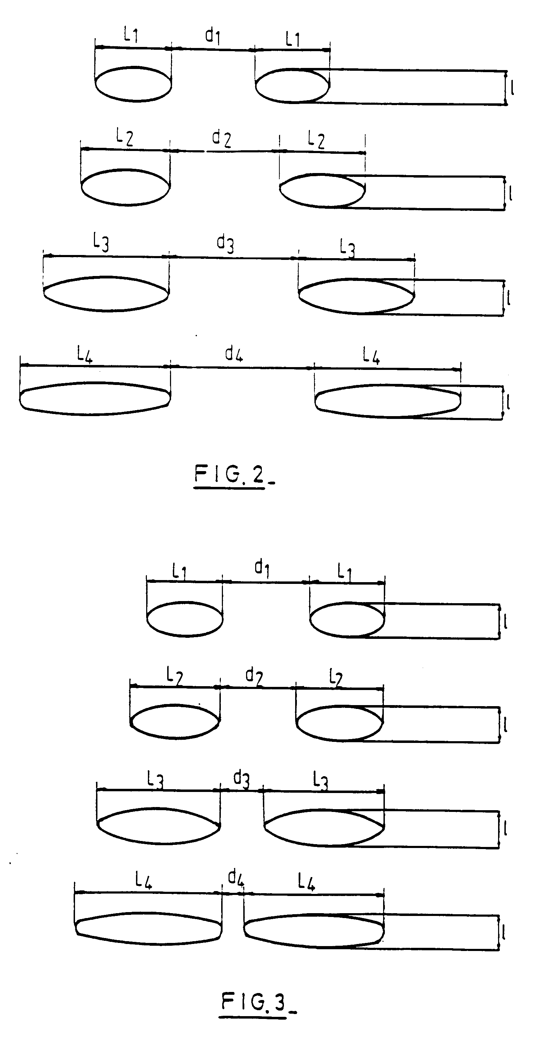

Dans la Fig. 2, on a représenté la disposition de deux microcratères successifs, dans le sens de la périphérie du cylindre, pour quatre vitesses différentes de rotation du disque hacheur. Ces vitesses, repérées V₁, V₂, V₃ et V₄ valaient respectivement 2500, 2200, 1900 et 1600 tr/min. Elles entraînent non seulement un allongement croissant des microcratères, mais également un écartement croissant entre ceux-ci. La densité de microcratères suivant la périphérie, K_{L}, exprimée en nombre de microcratères par pouce, diminue de manière sensible. La largeur des microcratères est, dans tous les cas, de 120 µm. Le tableau 1 ci-dessous donne les valeurs de la longueur (L), de l'écartement (d), de la densité (K_{L}) et du rapport (L/l) des microcratères formés aux différentes vitesses précitées.

**TABLEAU 1**

| Essai n° | V | L | L/l | d | K_{L} |
|---|---|---|---|---|---|
| | tr/min | µm | | µm | nb |
| 1 | 2500 | 170 | 1,42 | 113 | 90 |
| 2 | 2200 | 190 | 1,58 | 126 | 80 |
| 3 | 1900 | 220 | 1,83 | 145 | 70 |
| 4 | 1600 | 250 | 2,08 | 169 | 60 |

La fig. 3 illustre l'influence de l'élargissement des ouvertures du disque hacheur. Dans le cas présent, cet élargissement est obtenu par une diminution de l'écartement e entre deux ouvertures voisines, ce qui permet de ne pas modifier la nombre de ces ouvertures.

Le tableau 2 ci-dessous indique l'influence de la variation de cet écartement e, sur la longueur L et le rapport L/l des microcratères. La largeur l valait également 120 µm dans tous les cas.

**TABLEAU 2**

| Essai n° | e | L | d | L/l |
|---|---|---|---|---|
| | mm | µm | µm | |
| 1 | 1,33 | 170 | 113 | 1,42 |
| 2 | 1,10 | 190 | 93 | 1,58 |
| 3 | 0,86 | 210 | 73 | 1,75 |
| 4 | 0,63 | 230 | 53 | 1,92 |

On constate que la diminution de l'écartement e entraîne un resserrement des microcratères qui compense leur allongement et permet de conserver une densité de microcratères constante, égale à 90 dans le cas présent. Cette constance de la densité de microcratères est favorable pour la régularité de la rugosité du cylindre.

Pour illustrer l'influence de la forme allongée des microcratères sur l'adhérence des bourrelets, on a effectué diverses opérations de marquage d'un cylindre au moyen d'un laser d'une puissance de 800 W et en présence d'un jet d'oxygène ayant un débit de 12 l/min. Pour réaliser l'allongement des microcratères, on a modifié la vitesse de rotation du disque hacheur, ce qui a entraîné une variation de la densité K_{L} des microcratères dans le sens longitudinal de ceux-ci. Par contre, la densité K_{d} dans le sens transversal, c'est-à-dire parallèlement à l'axe longitudinal du cylindre, est restée constante.

Outre la longueur L des microcratères, telle qu'elle a été définie plus haut, on a mesuré également la hauteur H_{B} et la largeur l_{B} des bourrelets ainsi que la profondeur P_{c} et la largeur l_{c} des cratères après formation des bourrelets.

On a enfin mesuré la rugosité Rₐ ainsi que l'adhérence des bourrelets. Pour cette dernière mesure, on a utilisé la méthode décrite dans la demande de brevet LU-A-87.193. Les résultats obtenus sont rassemblés dans le tableau 3 ci-dessous.

**TALBEAU 3**

| Essai n° | K_{d} | K_{L} | L | H_{B} | l_{B} | P_{c} | l_{c} | Ra | L/l_{c} | F |
|---|---|---|---|---|---|---|---|---|---|---|
| | | | µm | µm | µm | µm | µm | µm | | N |
| a | 90 | 110 | 120 | 29 | 132 | 22 | 115 | 2,6 | 1,04 | 2,0 |
| b | 90 | 90 | 170 | 28 | 121 | 23 | 120 | 2,4 | 1,42 | 2,3 |
| c | 90 | 50 | 270 | 31 | 137 | 21 | 116 | 2,2 | 2,33 | 2,6 |

Ces résultats montrent qu'aussi bien les dimensions des bourrelets que celles des cratères ne subissent pratiquement aucune variation. La rugosité Rₐ diminue lorsque la vitesse de rotation du disque hacheur diminue, parce que la densité de microcratères (K_{L}) diminue; cette variation de la rugosité n'a cependant aucun effet sur l'adhérence des bourrelets.

L'augmentation de la longueur L des microcratères entraîne une augmentation du rapport L/l_{c}, qui s'accompagne d'un accroissement sensible de la force d'arrachement F en newton, c'est-à-dire de l'adhérence des bourrelets.

Les bourrelets étant pratiquement inchangés, l'amélioration de l'adhérence est due au fait que ces bourrelets se forment sur la zone échauffée de la surface du cylindre; cet effet est d'autant plus marqué que le microcratère est plus allongé.

Les microcratères ne peuvent cependant pas être allongés indéfiniment car, lorsque le rapport L/l atteint environ 5, une partie du métal fondu du bourrelet reflue vers l'arrière et comble partiellement le microcratère. Le bourrelet résultant est déformé de manière irrégulière.

Il va de soi que la présente invention n'est pas limitée aux exemples de réalisation qui viennent d'être décrits et illustrés. Diverses modifications peuvent y être apportées, en particulier dans la façon de pratiquer l'allongement des microcratères, selon le type de rayonnement énergétique utilisé.

## Revendications

1. Procédé pour améliorer l'adhérence des bourrelets associés à la multitude de microcratères formés dans la surface d'un cylindre de laminoir, qui tourne autour de son axe longitudinal, au moyen d'un rayonnement énergétique intermittent produit au moyen d'un organe rotatif ajouré, selon lequel on modifie au moins une dimension des ouvertures dudit organe rotatif ajouré pour donner au rapport L/l une valeur supérieure à 1 et inférieure à 5, L et l étant les dimensions des microcratères mesurées respectivement suivant la périphérie du cylindre et parallèlement à l'axe longitudinal du cylindre.

2. Procédé suivant la revendication 1, caractérisé en ce que l'on modifie au moins une dimension des ouvertures dudit organe rotatif ajouré pour donner audit rapport L/l une valeur comprise entre 1,1 et 2,5.

3. Procédé suivant l'une ou l'autre des revendications 1 et 2, caractérisé en outre en ce que l'on fait varier la vitesse de rotation dudit organe rotatif ajouré.

4. Procédé suivant l'une ou l'autre des revendications 1 à 3, caractérisé en outre en ce que l'on fait varier la vitesse de rotation dudit cylindre de laminoir.

## Claims

1. Method for improving the adhesion of the beads associated with the multitude of microcraters formed in the surface of a rolling-mill roll which rotates about its longitudinal axis, by means of intermittent energy radiation produced by means of a perforated rotary member, according to which at least one dimension of the openings of the said perforated rotary member is modified in order to give the ratio L/l a value greater than 1 and lower than 5, L and l being the dimensions of the microcraters measured along the periphery of the roll and parallel to the longitudinal axis of the roll, respectively.

2. Method according to Claim 1, characterised in that at least one dimension of the openings of the said perforated rotary member is modified in order to give the said ratio L/l a value of between 1.1 and 2.5.

3. Method according to either of Claims 1 and 2, characterised, in addition, in that the speed of rotation of the said perforated rotary member is varied.

4. Method according to any of Claims 1 to 3, characterised, in addition, in that the speed of rotation of the said rolling-mill roll is varied.

## Patentansprüche

1. Verfahren zur Verbesserung der Haftung von mit der Vielzahl von Mikrokratern in Verbindung stehenden Wulsten, wobei die Mikrokrater mittels intermittierender energiereicher Bestrahlung, die von einem sich drehenden, gelochten Element erzeugt wird, in der Oberfläche einer sich um ihre Längsachse drehenden Walzwerkwalze gebildet werden, bei dem man mindestens eine Dimension der Öffnungen jenes sich drehenden, gelochten Elementes modifiziert, so daß das Verhältnis L/l einen Wert größer als 1 und kleiner als 5 annimmt, wobei es sich bei L bzw.l um die Mikrokraterdimensionen handelt, die entlang des Walzenumfangs bzw. parallel zur Walzenlängsachse gemessen werden.

2. Verfahren nach Anspruch 1, dadurch gekennzeichnet, daß man mindestens eine Dimension der Öffnungen jenes sich drehenden, gelochten Elements modifiziert, so daß jenes Verhältnis L/l einen Wert zwischen 1,1 und 2,5 annimmt.

3. Verfahren nach Anspruch 1 oder 2, außerdem dadurch gekennzeichnet, daß man die Drehgeschwindigkeit jenes sich drehenden, gelochten Elements variiert.

4. Verfahren nach einem der Ansprüche 1 bis 3, außerdem dadurch gekennzeichnet, daß man die Drehgeschwindigkeit jener Walzwerkwalze variiert.
